# FASCICULE DE BREVET EUROPEEN

(11) **EP 0 655 574 B1**
(45) Date de publication et mention de la délivrance du brevet: **08.04.1998**
(21) Numéro de dépôt: 94402574.1
(22) Date de dépôt: 15.11.1994
(51) Int. Cl.: F16K 31/143, F16K 17/38, A62C 2/04

(54) **Dispositif d'ouverture et de fermeture de sécurité d'un robinet vanne**
Sicherheitsvorrichtung zur Öffnung oder Schliessung eines Schiebers
Safety device for opening or closing a gate valve

(30) Priorité: 25.11.1993 FR 9314084; 25.02.1994 FR 9402158
(43) Date de publication de la demande: 31.05.1995
(73) Titulaire: PYROALLIANCE, 78130 Les Mureaux (FR)
(72) Inventeur: Borg, Evrard, F-83110 Sanary (FR); Gouallec, Jean-Pierre, F-83100 Toulon (FR); Medail, Jean, F-83200 Toulon (FR)
(74) Mandataire: Pech, Bernard

(56) Documents cités:
- EP-A- 0 145 828
- DE-B- 1 113 344
- FR-A- 1 300 618
- FR-A- 1 429 396
- FR-A- 2 241 737
- FR-A- 2 450 398
- FR-A- 2 520 473
- US-A- 2 890 014

## Description

La présente invention se rapporte au domaine des dispositifs de manoeuvre des vannes. Plus précisément l'invention concerne un dispositif permettant en cas d'accident de manoeuvrer une vanne qui est normalement commandée par un arbre moteur actionné par un volant manuel ou par un moteur.

Les vannes utilisées sur les sites industriels sont souvent des vannes à déplacement vertical de l'obturateur du type vanne "à guillotine". Ces vannes possèdent toutes un arbre de commande couplé à un arbre moteur actionné lui-même par un dispositif moteur qui peut être un moteur électrique, hydraulique, pneumatique ou un volant manuel.

Un souci constant sur de tels sites est de pouvoir ouvrir ou fermer ces vannes rapidement en toutes circonstances et notamment en cas d'accident grave ou d'incendie.

Afin d'augmenter la fiabilité de fonctionnement de ces vannes, le dispositif moteur qui entraîne l'arbre rotatif moteur est souvent doublé. Ainsi les brevets FR-A-2 241 737 et FR-A-2 450 398 qui correspondent aux brevets US-A-3 838 609 et US-A-4 285 493 décrivent de telles vannes pour lesquelles l'arbre moteur peut être entraîné par un moteur traditionnel ou par un volant manuel.

Ces installations garantissent une bonne fiabilité de fonctionnement en temps normal mais ne garantissent pas la possibilité d'ouvrir ou de fermer la vanne lorsque les infrastructures lourdes du site telles que les circuits d'alimentation électrique ou pneumatique sont endommagées et que les circonstances, par exemple l'incendie, rendent impossible l'accès à la vanne pour une personne physique.

Il a alors été proposé, comme décrit dans le brevet FR-A-2 520 473 ou dans son correspondant américain US-A-4 691 893, un dispositif de sécurité qui peut prendre le relai d'un dispositif moteur traditionnel grâce à un désacouplement entre l'arbre de commande de la vanne et le dispositif moteur. Ce brevet décrit une vanne "guillotine" actionnée par un système pneumatique doublé d'un volant manuel.

En cas d'élévation de la température à proximité de la vanne, la fusion d'un élément métallique de jonction déconnecte le dispositif moteur et la vanne se referme grâce à des ressorts de rappel agissant sur l'obturateur de la vanne. Un tel système de sécurité permet bien l'emploi d'un dispositif moteur en temps normal mais n'est pas efficace dans toutes les configurations d'accident ou d'incendie puisqu'il ne se déclanche que s'il y a élévation forte de température à proximité de la vanne.

L'homme de métier ne dispose donc pas à l'heure actuelle d'un dispositif de sécurité pour manoeuvrer une vanne qui, à la fois, permette l'emploi en temps normal d'un dispositif moteur traditionnel et qui soit immédiatement efficace dans tous les cas d'accident ou d'incendie.

L'objet de la présente invention est précisément de proposer un tel dispositif.

L'invention concerne donc un dispositif de manoeuvre de sécurité d'une vanne comportant un corps et possédant un obturateur qui se déplace par translation et qui est commandé par un arbre de commande actionné lui-même par un arbre moteur disposé dans le prolongement du dit arbre de commande et solidaire de ce dernier par un système de liaison, le dit dispositif étant caractérisé en ce que :
**1./** le dit système de liaison comporte une enceinte cylindrique creuse dans laquelle pénètrent chacun des deux arbres, la dite enceinte creuse contenant une bague étanche aux gaz et solidarisée en translation à l'un au moins des deux arbres au moyen d'une pièce de contact escamotable sous l'action d'une pression exercée sur la dite bague,
**2./** la dite bague supporte un ensemble de liaison qui enserre simultanément les extrémités du dit arbre de commande et du dit arbre moteur situées à l'intérieur de la dite enceinte,
**3./** la dite enceinte comporte un orifice supérieur situé de manière à se trouver au-dessus de la dite bague lorsque la vanne est ouverte,
**4./** le dit arbre de commande comporte au moins une butée d'arrêt disposée de manière à se trouver sous la dite bague et à l'intérieur de la dite enceinte quelle que soit la position du dit obturateur,
**5./** une source de fluide est reliée au dit orifice supérieur.

Selon une première réalisation préférée de l'invention le dit ensemble de liaison est incorporé à la dite bague.

Selon une seconde réalisation préférée de l'invention la dite source de fluide est une source de gaz sous pression.

Selon une troisième réalisation préférée de l'invention la dite source de gaz est un réservoir de gaz sous pression muni d'un robinet. Avantageusement le dit robinet sera un robinet pyrotechnique à commande électrique ou actionné par un percuteur.

Selon une quatrième réalisation préférée de l'invention la dite source de gaz est un générateur pyrotechnique de gaz muni d'un initiateur à déclanchement électrique ou à déclanchement par percussion.

Selon une première variante préférée l'extrémité de l'arbre moteur pénètre dans l'extrémité de l'arbre de commande qui est creuse. Dans ce cas la dite pièce de contact est avantageusement une pièce de cisaillement comme une goupille cisaillable qui solidarise à la fois la bague, l'arbre de commande ainsi que l'arbre moteur et l'extrémité de l'arbre de commande comporte au moins un conduit transversal dans lequel sont disposées, de part et d'autre de l'arbre moteur, au moins deux billes qui sont radialement calées par la bague et qui prennent appui contre le fond d'une gorge circulaire portée par l'extrémité de l'arbre moteur.

Selon une seconde variante préférée c'est au contraire l'extrémité de l'arbre de commande qui pénètre dans l'extrémité de l'arbre moteur qui est creuse.

Selon une troisième variante préférée l'extrémité de l'arbre de commande ainsi que l'extrémité de l'arbre moteur sont élargies et reposent l'une sur l'autre enserrées dans au moins deux pattes de maintien en forme de U qui sont elles-mêmes disposées dans un évidement supérieur cylindrique présenté par la bague. Dans ce cas la pièce de contact est avantageusement un ressort de poussée en appui, d'une part, sur la butée d'arrêt et, d'autre part, sur la bague.

Les deux premières variantes permettent une réalisation particulièrement intéressante de l'invention lorsque la bague étanche n'enserre pas directement les extrémités des deux arbres mais supporte un ensemble de liaison qui, lui, enserre les extrémités des deux arbres. Dans ce cas la dite enceinte comporte un orifice inférieur qui est situé de manière à se trouver en-dessous de la dite bague lorsque la vanne est fermée et qui est également relié à une source de fluide ; par ailleurs le dit arbre de commande comporte une seconde butée disposée de manière à se trouver au-dessus de la dite bague et à l'intérieur de la dite enceinte quelle que soit la position de l'obturateur.

Ainsi lorsque la bague étanche enserre simultanément les extrémités des deux arbres, la manoeuvre de la vanne, en ouverture ou en fermeture, est obtenue par l'action de l'arbre moteur entraîné par un bloc moteur ou par un volant manuel. En cas d'accident se produisant lorsque la vanne est ouverte, et rendant impossible le fonctionnement de l'arbre moteur, il est possible d'assurer la fermeture de la vanne grâce au dispositif de sécurité selon l'invention. Pour ce faire on provoque l'arrivée du fluide dans l'enceinte creuse par l'orifice situé au-dessus de la bague étanche.

L'arrivée du fluide entraîne l'escamotage de la pièce de contact et le déplacement de la bague étanche jusqu'à la butée d'arrêt porté par l'arbre de commande de la vanne.

Dans cette configuration l'arbre moteur n'est plus solidaire de l'arbre de commande de la vanne et la bague étanche en appui sur la butée d'arrêt portée par l'arbre de commande joue le rôle de piston qui, sous l'action de la pression du fluide, provoque la fermeture de la vanne par descente de l'obturateur.

Lorsque l'extrémité de l'un des arbres pénètre dans l'extrémité creuse de l'autre arbre et que ces extrémités sont enserrées par un ensemble de liaison supporté par la bague étanche selon la réalisation particulière décrite plus haut, la manoeuvre de la vanne, en fonctionnement normal, est obtenue par l'action de l'arbre moteur entraîné par un bloc moteur ou par un volant manuel. En cas d'accident rendant impossible le fonctionnement de l'arbre moteur, il est possible d'assurer la fermeture ou l'ouverture de la vanne grâce au dispositif selon l'invention. Pour ce faire on provoque l'arrivée du fluide dans l'enceinte creuse soit par l'orifice supérieur si l'on veut fermer la vanne, soit par l'orifice inférieur si on veut ouvrir la vanne.

L'arrivée du fluide entraîne l'escamotage de la pièce de contact et le déplacement de la bague étanche jusqu'à la butée d'arrêt disposée sous la bague si le fluide arrive par l'orifice supérieur ou jusqu'à la butée d'arrêt disposée au-dessus de la bague si le fluide arrive par l'orifice inférieur.

Dans cette configuration l'arbre moteur n'est plus solidaire de l'arbre de commande de la vanne et la bague étanche en appui sur l'une des butées d'arrêt joue le rôle de piston qui, sous l'action de la pression du fluide, provoque soit la fermeture de la vanne par descente de l'obturateur, soit l'ouverture de la vanne par remontée de l'obturateur, avec coulissement dans l'extrémité creuse présentée par l'un des deux arbres de l'extrémité de l'autre arbre.

On donne ci-après une description détaillée de l'invention en se référant aux figures 1 à 8.

La figure 1 est une vue en coupe d'une vanne, en position ouverte, et munie d'un dispositif de fermeture de sécurité selon la première variante préférée.

La figure 2 est une vue en coupe de la vanne représentée à la figure 1 après fonctionnement du dispositif de sécurité.

La figure 3 est une vue en coupe d'une vanne, en position ouverte, et munie d'un dispositif de fermeture de sécurité selon la troisième variante préférée.

La figure 4 est une vue en coupe de la vanne réprésentée à la figure 3 après fonctionnement du dispositif de sécurité.

La figure 5 représente, vue en coupe, une vanne en position "ouverte" pour laquelle l'abre de commande pénètre dans l'arbre moteur et qui possède un dispositif d'ouverture et de fermeture de sécurité selon la réalisation particulière de l'invention.

La figure 6 représente, vue en coupe, la même vanne après fonctionnement en "fermeture" du dispositif de sécurité.

La figure 7 représente, vue en coupe, la même vanne en position "fermée".

La figure 8 représente, vue en coupe, la même vanne après fonctionnement en "ouverture" du dispositif de sécurité.

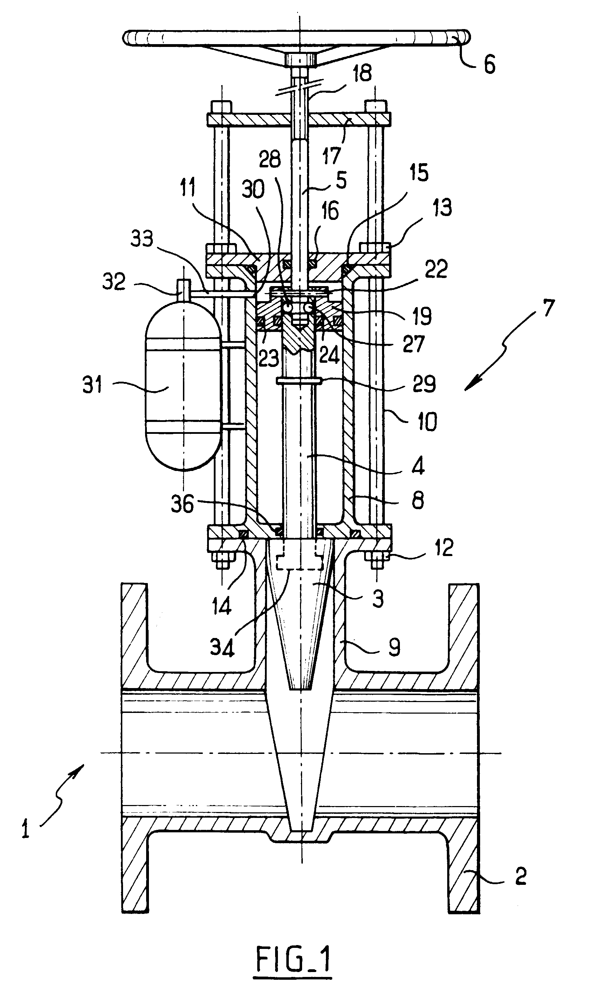

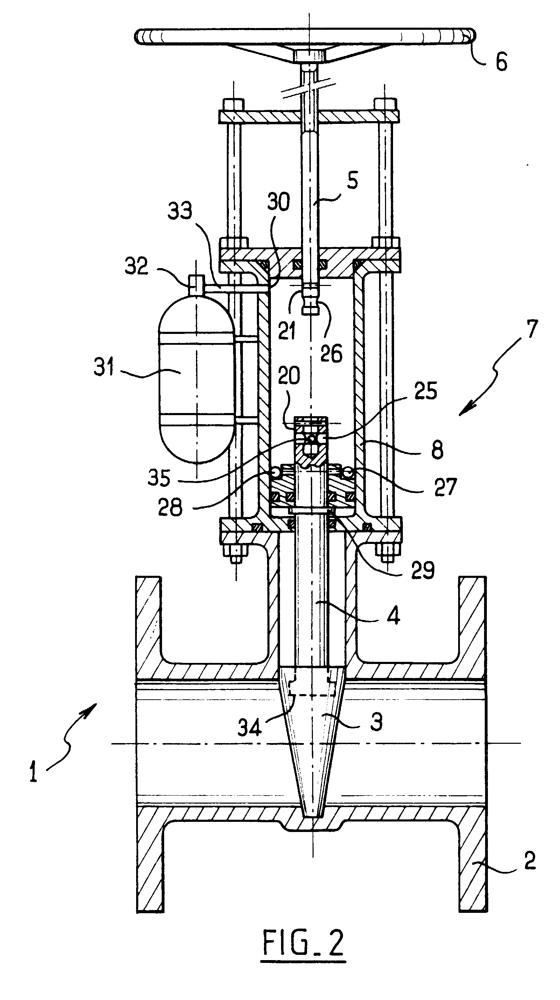

On a représenté aux figures 1 et 2 une vanne 1 munie d'un dispositif de fermeture de sécurité selon l'invention.

La vanne 1 comporte un corps creux 2 interposé entre deux canalisations non représentées sur les figures. Ce bâti 2 peut être fermé par un obturateur 3 qui se déplace en translation et qui est commandé par un arbre de commande 4. Une telle vanne est encore connue sous les appelations. de "vanne à opercule" ou "vanne à guillotine". L'arbre de commande 4 est lui-même actionné par un arbre rotatif moteur 5 disposé dans le prolongement de l'arbre de commande 4. L'arbre moteur 5 est entraîné par un bloc moteur ou par un volant manuel 6 comme représenté sur les figures.

L'obturateur 3 est un obturateur plan à section en forme de dièdre dans lequel pénètre l'extrémité inférieure 34 de l'arbre de commande 4. Cette extrémité 34 est élargie et contenue dans un évidement approprié présenté par l'obturateur 3. Ainsi l'obturateur 3 et l'arbre de commande 4 sont solidaires en translation mais l'arbre de commande 4 est libre en rotation par rapport à l'obturateur 3.

L'arbre moteur 5 est solidaire de l'arbre de commande 4 par un système de liaison 7 qui est maintenant décrit en détails.

Le système de liaison 7 comporte une enceinte cylindrique creuse 8 fixée au corps 2 de la vanne 1 comme représenté sur les figures et dans laquelle pénètrent chacun des dits arbres 4 et 5. Le corps 2 comporte un col supérieur 9 dans lequel se loge l'obturateur 3 lorsque la vanne 1 est ouverte. C'est sur ce col 9 que repose l'enceinte cylindrique 8 fixée au moyen de barres filetées de fixation 10. L'enceinte 8 est fermée par un couvercle 11 possédant un orifice central et traversé par les barres de fixation 10. L'enceinte 8 est fixée par des boulons 12 à la partie supérieure du col 9 et le couvercle 11 est fixé par des boulons 13 à l'enceinte 8. Lorsque la vanne 1 est ouverte l'arbre de commande 4 est entièrement situé à l'intérieur de l'enceinte 8 et l'arbre moteur 5 pénètre par l'orifice central du couvercle 11 dans l'enceinte 8. Des joints d'étanchéïté 14, 15, 16 et 36 rendent l'ensemble constitué par le col 9, l'enceinte 8 et le couvercle 11 étanche. Les barres de fixation 10 portent également dans leur partie supérieure un écrou 17 possédant un orifice central fileté dans lequel engrène un filetage 18 porté par l'arbre moteur 5. La dite enceinte creuse 8 contient une bague cylindrique 19 étanche aux gaz qui enserre simultanément l'extrémité 20 de l'arbre de commande 4 et l'extrémité 21 de l'arbre moteur 5 qui sont situées à l'intérieur de la dite enceinte.
Cette bague 19 elle-même solidarisée à l'un des deux arbres 4 et 5 au moyen d'une pièce de contact escamotable sous l'action d'une pression de valeur prédéterminée exercée sur la dite bague.

Selon une première variante préférée représentée aux figures 1 et 2 la dite pièce de contact est une goupille cisaillable 22 qui traverse à la fois la bague 19, l'arbre de commande 4 et l'arbre moteur 5.

La bague 19 comprend un orifice central dont le diamètre est égal au diamètre de l'arbre de commande 4 et elle est placée autour de l'extrémité 20 de cet arbre. La bague 19 comporte une partie basse dont le diamètre est égal au diamètre intérieur de l'enceinte 8 et qui contient des joints 23 et 24 assurant l'étanchéïté aux gaz. La bague 19 comporte une partie supérieure de diamètre plus étroit à travers laquelle passe la goupille 22. L'extrémité 21 de l'arbre moteur 5 pénétre dans l'extrémité 20 de l'arbre de commande qui est creuse de sorte que la goupille 22 traverse à la fois la bague 19, l'arbre de commande 4 et l'arbre moteur 5.

Afin d'améliorer la liaison mécanique entre l'arbre moteur 5 et l'arbre de commande 4 un conduit cylindrique creux 25 est ménagé au travers de la partie supérieur 20 de l'arbre de commande 4 dans laquelle pénètre l'extrémité 21 de l'arbre moteur 5. Une gorge circulaire 26 est ménagé sur la dite extrémité 21 de manière à se trouver en regard du conduit 25 lorsque l'arbre moteur 5 est introduit dans l'arbre de commande 4.

Deux billes métalliques 27 et 28 sont introduites dans le dit conduit 25 de part et d'autre de l'arbre moteur 5 et sont calées par la bague 19 de manière à prendre appui sur le fond de la gorge 26.

Avantageusement on prévoiera un second conduit 35, perpendiculaire au conduit 25 qui vient d'être décrit, et qui contient également deux billes non représentées sur les figures.

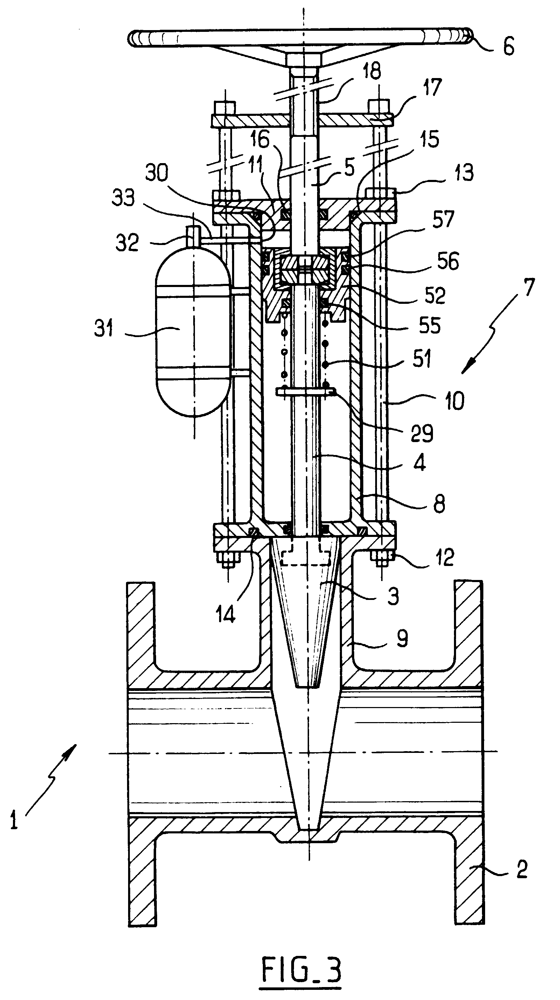

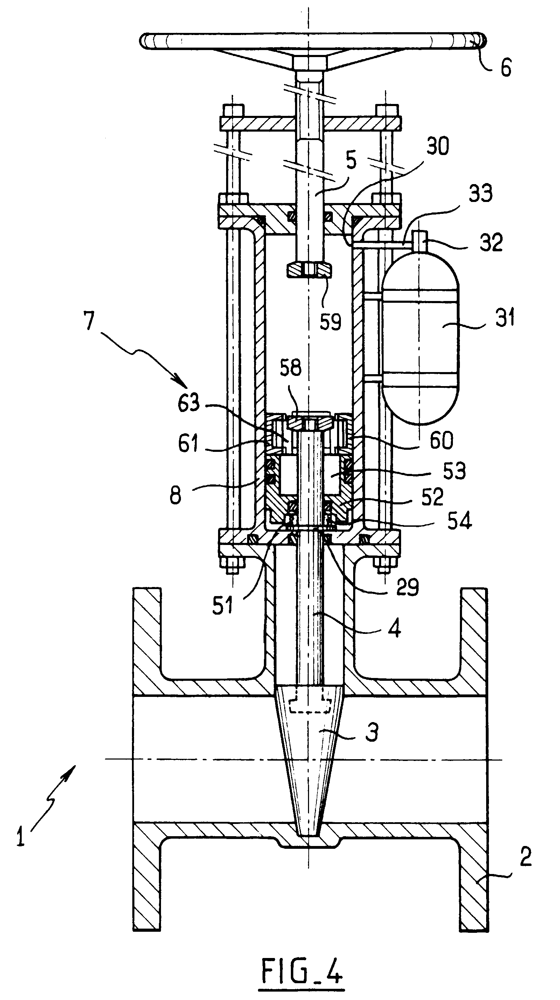

Selon une autre variante préférée représentée aux figures 3 et 4 sur lesquelles les pièces identiques à celles précédemment décrites portent les mêmes repères que sur les figures 1 et 2, la dite pièce de contact est un ressort 51 en appui, d'une part, sur une butée d'arrêt 29 portée par l'arbre de commande 4 et qui sera détaillée un peu plus loin dans la description et, d'autre part, sur une bague 52 analogue dans son principe à la bague 19 précédemment décrite.

La bague 52 est une bague cylindrique creuse comportant une partie supérieure dont le diamètre extérieur correspond au diamètre intérieur de l'enceinte 8 et une partie inférieure de diamètre extérieur plus petit. La bague 52 présente dans sa partie supérieure un évidement supérieur cylindrique 53 dont le diamètre est supérieur à celui de l'arbre de commande 4. Cet évidement 53 se prolonge par un orifice dont le diamètre est égal à celui de l'arbre de commande 4 et se termine par un évidement inférieur 54 dont le diamètre est supérieur à celui de l'arbre de commande 4. Des joints 55, 56 et 57 assurent l'étanchéïté de la bague 52 aux gaz. L'extrémité 59 de l'arbre moteur 5 repose sur l'extrémité 58 de l'arbre de commande 4. Comme représenté sur les figures ces extrémités sont élargies par rapport à leurs arbres porteurs. Elles sont avantageusement constituées par des galets vissés sur des picots filetés portés par les dits arbres.

Ces extrémités 58 et 59 sont enserrées dans au moins deux pattes de maintien en forme de U qui sont elles-mêmes disposées dans l'évidement supérieur 53 présenté par la bague 52. Dans la réalisation représentée aux figures 3 et 4, quatre pattes de maintien sont utilisées au total, trois d'entre elles, 60, 61 et 63 étant visibles sur les figures.

La dite enceinte 8 comporte de manière caractéristique un orifice 30 situé de manière à se trouver au-dessus de la dite bague 19 ou 52 lorsque la vanne 1 est ouverte et que l'obturateur 3 se trouve dans le col 9 du bâti 2. Cet orifice 30 est également désigné dans la présente description comme "orifice supérieur".

Selon une autre caractéristique de l'invention à laquelle il a déjà été fait allusion un peu plus haut, l'arbre de commande 4 porte une butée d'arrêt 29. Cette butée 29 est disposée de manière à se trouver, comme représenté sur les figures 1 à 4, sous la dite bague 19 ou 52 et à l'intérieur de l'enceinte 8 quelle que soit la position de l'obturateur 3.

Enfin, selon une dernière caractéristique de l'invention, une source 31 de gaz sous pression est reliée au dit orifice 30.

Comme représenté sur les figures 1 à 4 la dite source 31 peut être un réservoir de gaz sous pression muni d'un robinet 32 relié à l'orifice 30 par une canalisation 33. Le dit robinet 32 sera avantageusement un robinet pyrotechnique à commande électrique ou bien actionné par un percuteur.

La dite source de gaz peut également être un générateur pyrotechnique de gaz muni d'un initiateur à commande électrique ou bien actionné par un percuteur.

On décrit maintenant le fonctionnement d'un dispositif de fermeture de sécurité selon l'invention en se référant d'abord aux figures 1 et 2.

Lorsque la bague 19 est placée comme représenté à la figure 1, la mise en rotation du volant 6 provoque, par l'intermédiaire du filetage 18 la montée ou la descente de l'arbre moteur 5 qui est solidaire de l'arbre de commande 4 auquel est fixé l'obturateur 3.

Si un accident se produit sur le site lorsque la vanne 1 est ouverte en rendant impossible l'accès au volant 6 et que l'on désire néanmoins fermer la vanne, on provoque l'arrivée du gaz sous pression par ouverture du robinet pyrotechnique ou par allumage de l'initiateur du générateur. Dans le cas où cette action est obtenue par un percuteur il n'y a aucune difficulté. Dans le cas où cette action est d'origine électrique, l'énergie nécessaire étant faible, il sera avantageux de prévoir un circuit secondaire protégé ou même un système à piles fonctionnant par télécommande de manière à être indépendant du circuit d'alimentation principal qui est souvent endommagé en cas d'accident.

Le gaz sous pression entre dans l'enceinte 8 par l'orifice 30 et exerce une pression sur la bague 19. Lorsque la force exercée sur la bague est supérieure à la limite de rupture de la goupille 22, cette dernière se rompt et la bague 19 est poussée jusqu'à venir au contact de la butée 29.

Les billes 27 et 28 ne sont alors plus calées.

La bague 19 en appui sur la butée 27 joue le rôle d'un piston qui, sous la pression du gaz, entraîne l'arbre de commande 4 qui n'est plus solidaire de l'arbre moteur 5. L'arbre 4 peut donc descendre sans avoir à forcer l'engrenage 18. Avec une quantité d'énergie relativement faible il est donc possible de faire descendre l'obturateur 3 et de fermer la vanne 1.

Le dispositif de sécurité représenté aux figures 3 et 4 a un fonctionnement tout à fait analogue. En temps normal c'est l'arbre moteur 5 qui entraîne en montée ou en descente l'arbre de commande 4. En cas d'accident survenant lorsque la vanne 1 est ouverte, l'arrivée du gaz sous pression par l'orifice 30 développe une pression sur la bague 52. Lorsque la force exercée sur cette bague est supérieure à la résistance du ressort 51, ce dernier se comprime et la bague 52 descend le long de l'arbre de commande 4 jusqu'à compression totale du ressort 51 contre la butée 29. Les pattes de maintien 60, 61 et 63 n'étant plus maintenues elles se séparent et tombent sur la bague 52 et les deux arbres ne sont plus solidaires. La bague 52 en appui sur la butée 29 par l'intermédiaire du ressort 51 joue alors le rôle d'un piston qui entraîne l'arbre de commande 4 sans avoir à forcer l'engrenage 18. La descente de l'arbre de commande 4 provoque la descente de l'obturateur 3 qui ferme la vanne 1.

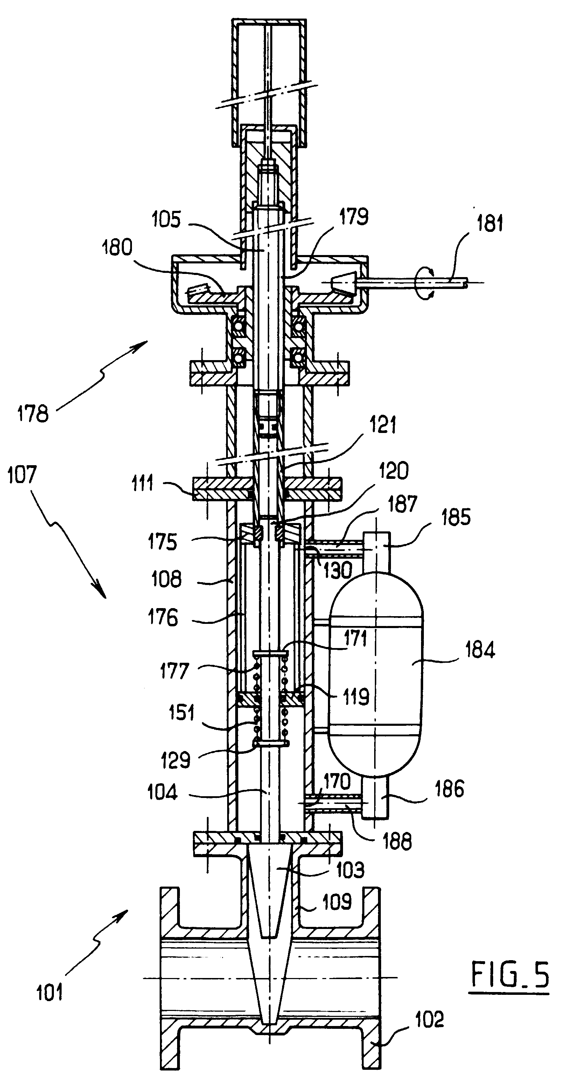

On a représenté aux figures 5 à 8 une vanne 101 équipée d'un dispositif de sécurité fonctionnant en ouverture et en fermeture selon la réalisation particulière de l'invention. La vanne 101 se compose d'un corps 102 interposé entre deux canalisations non représentées sur les figures. Ce corps 102 est surmonté par un col 109 sur lequel est fixée une enceinte étanche 108 fermée dans sa partie supérieure par un couvercle 111 possédant un orifice central. Un obturateur 103 est logé dans le col 109 lorsque la vanne 101 est ouverte. L'obturateur 103 est un obturateur plan à section en forme de dièdre. Cet obturateur 103 est prolongé par un arbre de commande 104 qui pénètre dans l'enceinte 108. L'arbre de commande 104 est solidaire en translation de l'obturateur 103 mais est fixe en rotation par rapport à ce dernier. Un arbre moteur 105 pénètre dans l'enceinte 108 et est solidarisé en translation avec l'arbre de commande 104 par un système de liaison 107 qui sera décrit en détails un peu plus loin. La partie de l'arbre moteur 105 située en dehors de l'enceinte étanche 108 est contenue dans un bâti 178. La partie supérieure de l'arbre moteur 105 comporte un filetage externe 179 qui engrène dans un écrou tournant 180 actionné en rotation par un arbre d'entraînement 181 commandé par un moteur ou par un volant manuel. Il est à observer que dans cette réalisation l'arbre moteur 105 est fixe en rotation car solidarisé à l'arbre de commande 104 qui est fixe par rapport à l'obturateur 103 qui ne se déplace qu'en translation. La rotation de l'écrou 180 provoque donc uniquement la montée ou la descente de l'arbre moteur 105 qui entraîne l'arbre de commande 104 et l'obturateur 103.

La partie inférieure 121 de l'arbre moteur 105 est creuse. Cette partie creuse peut ne constituer qu'une seule pièce avec le reste de l'arbre 105 ou être constituée par un tube creux vissé sur l'arbre 105 proprement dit comme représenté sur les figures. C'est cette partie inférieure creuse qui pénètre dans l'enceinte 108. L'extrémité supérieure 120 de l'arbre de commande 104 pénètre dans cette partie inférieure creuse 121 de l'arbre moteur 105.

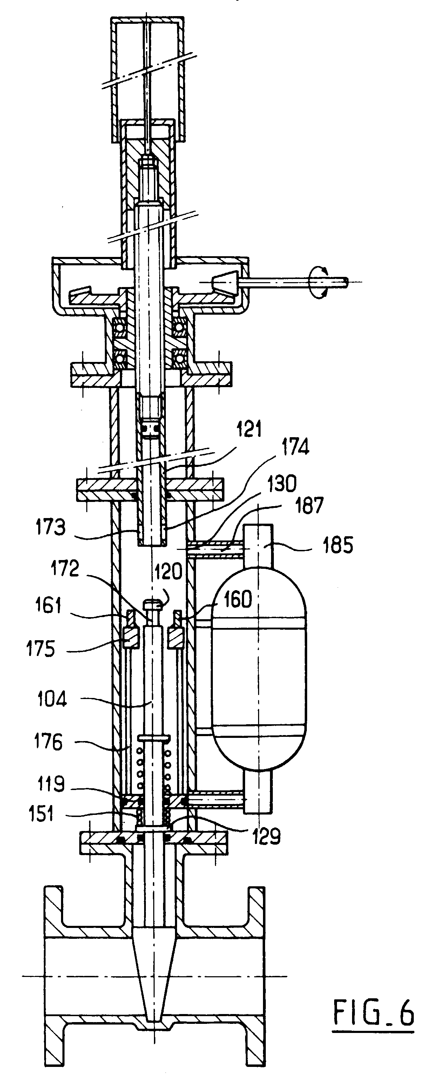

Le système de liaison des deux arbres comprend une bague 119 portée par l'arbre moteur 104. Des joints d'étanchéïté 182 et 183 disposés d'une part entre la bague 119 et l'arbre 104 et d'autre part entre la bague 119 et l'enceinte 108 rendent cette bague étanche aux gaz. La bague 119 supporte un ensemble de liaison qui est constitué par des clavettes rigides 160 et 161 disposées dans deux alvéoles 173 et 174 portées par l'extrémité creuse 121 de l'arbre moteur 105 et maintenues en appui contre un gorge 172 portée par l'extrémité 120 de l'arbre de commande 104 grâce à une couronne circulaire 175 reliée de manière indéformable à la dite bague 119 par des tiges rigides 176. Les éléments constitutifs du dit ensemble de liaison sont en particulier visibles à la figure 6.

Les clavettes 160 et 161 doivent être indéformables. Afin de pouvoir être facilement éjectées hors des alvéoles 173 et 174 elles seront avantageusement en forme de prisme ou de demi-lune. On pourra, dans le même but, également prévoir un ressort d'éjection disposé entre les clavettes dans un orifice traversant la gorge 172. La couronne circulaire 175 ne doit pas être étanche aux gaz, elle pourra avantageusement être en forme d'étoile.

De manière caractéristique selon cette réalisation l'arbre de commande 104 comporte une première butée d'arrêt 129 disposée de manière à se trouver sous la bague 119 et à l'intérieur de l'enceinte 108 quelle que soit la position de l'obturateur 103 et une seconde butée d'arrêt 171 disposée de manière à se trouver au-dessus de la bague 119 et à l'intérieur de l'enceinte 108 quelle que soit la position de l'obturateur 103.

Comme représenté sur les figures 5 à 8, la pièce de contact est constituée par un premier ressort de poussée 151 prenant appui d'une part sur la bague 119 et d'autre part sur la butée 129 située sous la dite bague et par un deuxième ressort de poussée 177 prenant appui d'une part sur la bague 119 et d'autre part sur la butée 171 située au-dessus de la dite bague. Les ressorts 151 et 177 sont des ressorts pré-contraints dont la tension de compression doit être supérieure aux contraintes de frottement de la bague 119 contre la surface intérieure de l'enceinte 108 . Dans la pratique le choix de tels ressorts sera facile car les contraintes de frottement de la bague 119 contre la surface intérieure de l'enceinte 108 sont de quelques kg tandis que les forces exercées sur la bague en cas de mise en oeuvre du dispositif de sécurité seront de plusieurs tonnes.

Selon une dernière caractéristique de cette réalisation, l'enceinte étanche 108 comporte, en plus d'un orifice supérieur 130 situé de manière à se trouver au-dessus de la bague 119 lorsque la vanne est normalement ouverte, un orifice inférieur 170 situé de manière à se trouver en-dessous de la bague 119 lorsque la vanne est normalement fermée. On entend par "normalement ouverte" ou "normalement fermée" le fait que la vanne soit ouverte ou fermée par actionnement de l'arbre rotatif d'entraînement 181. Les dits orifices sont reliés à une source de fluide. Il peut s'agir de sources distinctes ou, comme représenté sur les figures 5 à 8, d'une source unique 184. Dans ce cas l'orifice supérieur 130 est relié par une canalisation 187 et par un robinet 185 à cette source tandis que l'orifice inférieur 170 est relié à cette source par une canalisation distincte 188 et par un robinet distinct 186. Avantageusement la source de fluide 184 sera une source de gaz sous pression et les robinets 185 et 186 seront des robinets pyrotechniques à commande électrique fonctionnant sur un réseau secondaire distinct du circuit principal du site ou seront actionnés par un percuteur.

Le fonctionnement d'une vanne équipée d'un dispositif de sécurité selon cette réalisation de l'invention est le suivant.

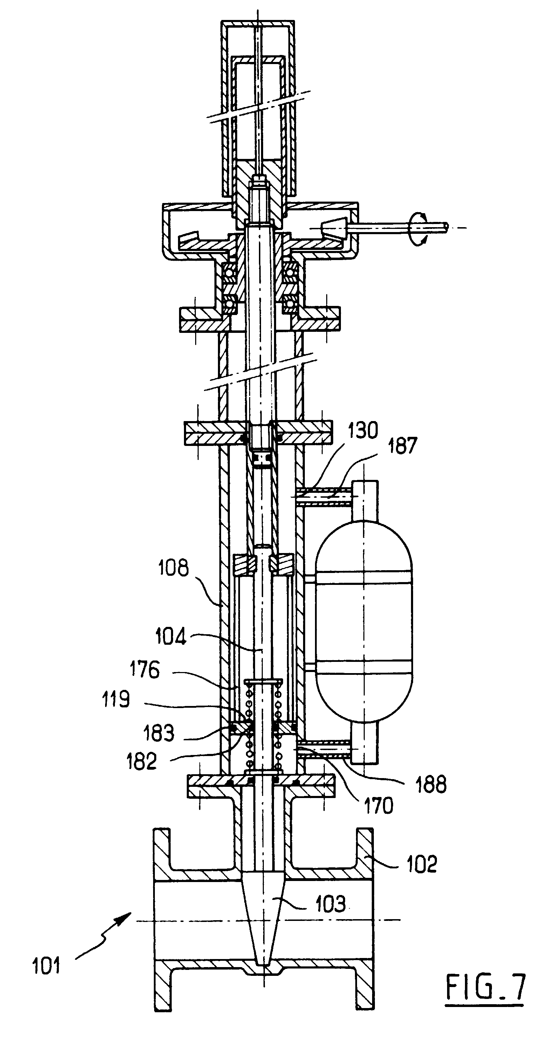

En temps normal c'est l'arbre rotatif d'entraînement 181 qui entraîne l'écrou 180 qui provoque la montée ou la descente de l'arbre moteur 105 solidaire de l'arbre de commande 104 pour mettre la vanne en position ouverte comme représenté à la figure 5 ou en position fermée comme représenté à la figure 7.

En cas d'accident survenant lorsque la vanne est ouverte, l'ouverture du robinet 185 permet au gaz sous pression de pénétrer dans l'enceinte 108 par l'orifice 130. Lorsque la force exercée sur la bague 119 est supérieure à la la résistance du ressort 151, ce dernier se comprime et la bague 119 descend le long de l'arbre de commande 104 jusqu'à compression totale du ressort 151 contre la butée 129 en entraînant par l'intermédiaire des tiges 176 la couronne 175. Les clavettes 160 et 161 n'étant plus maintenues, elles sont éjectées hors des alvéoles 173 et 174 et tombent sur la couronne 175. Les deux arbres 104 et 105 ne sont plus solidaires. La bague 119 en appui sur la butée 129 par l'intermédiaire du ressort 151 comprimé joue alors le rôle d'un piston pour entraîner l'arbre de commande 104 sans avoir à forcer l'engrenage de l'arbre 105 dans l'écrou 180. La descente de l'arbre de commande 104 provoque la descente de l'obturateur 103 qui ferme la vanne 101 comme représenté à la figure 6.

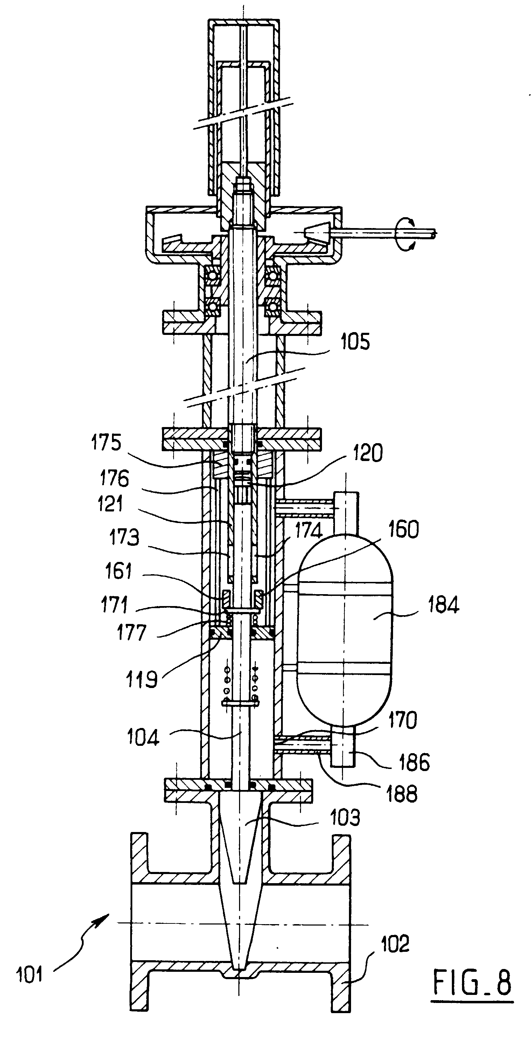

En cas d'accident survenant lorsque la vanne est fermée, l'ouverture du robinet 186 permet au gaz sous pression de pénétrer dans l'enceinte 108 par l'orifice 170. Lorsque la force exercée sur la bague 119 est supérieure à la résistance du ressort 177 ce dernier se comprime et la bague 119 remonte le long de l'arbre de commande 104 jusqu'à compression totale du ressort 177 contre la butée 171 en entraînant par l'intermédiaire des tiges 176 la couronne 175. Les clavettes 160 et 161 n'étant plus maintenues, elles sont éjectées hors des alvéoles 173 et 174 et tombent sur la butée 171. Les deux arbres 104 et 105 ne sont plus solidaires. La bague 119 en appui sur la butée 171 par l'intermédiaire du ressort 177 comprimé joue alors le rôle d'un piston pour pousser l'extrémité 120 de l'arbre de commande 104 dans la partie creuse 121 de l'arbre moteur 105 sans avoir à forcer l'engrenage de l'arbre 105 dans l'écrou 180. La montée de l'arbre de commande 104 provoque la montée de l'obturateur 103 qui ouvre la vanne 101 comme représenté à la figure 8.

## Revendications

1. Dispositif de manoeuvre de sécurité d'une vanne (1, 101) comportant un corps (2, 102) et possédant un obturateur (3, 103) qui se déplace par translation et qui est commandé par un arbre de commande (4, 104) actionné lui-même par un arbre moteur (5, 105) disposé dans le prolongement du dit arbre de commande (4, 104) et solidaire de ce dernier par un système de liaison (7, 107) caractérisé en ce que :
**1)** le dit système de liaison (7, 107) comporte une enceinte cylindrique creuse (8, 108) dans laquelle pénètrent chacun des deux arbres, la dite enceinte (8, 108) contenant une bague (19,52, 119) étanche aux gaz et solidarisée en translation à l'un au moins des deux arbres au moyen d'une pièce de contact (22, 51, 151, 177) escamotable sous l'action d'une pression exercée sur la dite bague (19,52, 119),
**2)** la dite bague (19,52, 119) supporte un ensemble de liaison (27, 28, 60, 61, 63, 160, 161) qui enserre simultanément les extrémités du dit arbre de commande (4, 104) et du dit arbre moteur (5, 105) situées à l'intérieur de la dite enceinte (8, 108),
**3)** la dite enceinte (8, 108) comporte un orifice supérieur (30, 130) situé de manière à se trouver au-dessus de la dite bague (19,52, 119) lorsque la vanne est ouverte,
**4)** le dit arbre de commande (4, 104) comporte au moins une butée d'arrêt (29, 129) disposée de manière à se trouver sous la dite bague (19,52, 119) et à l'intérieur de la dite enceinte (8, 108) quelle que soit la position de l'obturateur (3, 103),
**5)** une source de fluide est reliée au dit orifice supérieur (30, 130).

2. Dispositif selon la revendication 1 caractérisée en ce que le dit ensemble de liaison est incorporé à la dite bague (19,52).

3. Dispositif selon la revendication 2 caractérisée en ce que la dite source de fluide est une source de gaz sous pression (31).

4. Dispositif selon la revendication 3 caractérisé en ce que la dite source de gaz (31) est un réservoir de gaz sous pression muni d'un robinet (32).

5. Dispositif selon la revendication 3 caractérisé en ce que la dite source de gaz (31) est un générateur pyrotechnique de gaz muni d'un initiateur.

6. Dispositif selon la revendication 3 caractérisé en ce que l'extrémité (21) de l'arbre moteur (5) pénètre dans l'extrémité (20) de l'arbre de commande (4) qui est creuse.

7. Dispositif selon la revendication 6 caractérisée en ce que la dite pièce de contact est une goupille cisaillable (22) qui solidarise à la fois la bague (19), l'arbre de commande (4) et l'arbre moteur (5).

8. Dispositif selon la revendication 7 caractérisé en ce que la dite extrémité (20) de l'arbre de commande (4) comporte au moins un conduit transversal (25) dans lequel sont disposées, de part et d'autre de l'arbre moteur (5) au moins deux billes (27,28) qui sont radialement calées par la bague (19) et qui prennent appui contre le fond d'une gorge circulaire (26) portée par l'extrémité (21) de l'arbre moteur (5).

9. Dispositif selon la revendication 3 caractérisé en ce que l'extrémité de l'arbre de commande (4) pénètre dans l'extrémité de l'arbre moteur (5) qui est creuse.

10. Dispositif selon la revendication 3 caractérisé en ce que la bague (52) présente un évidement supérieur cylindrique (53) et en ce que les extrémités (58,59) des dits arbres (4,5) sont élargies et enserrées dans au moins deux pattes de maintien (60,61) elles-mêmes disposées dans l'évidement (53) présenté par la bague (52).

11. Dispositif selon la revendication 10 caractérisé en ce que la dite pièce de contact est un ressort de poussée (51) en appui d'une part sur la butée d'arrêt (29) et d'autre part sur la bague (52).

12. Dispositif selon la revendication 1 caractérisé en ce que :
**i)** l'extrémité de l'un des deux arbres (104, 105) pénètre dans l'extrémité de l'autre qui est creuse,
**ii)** la dite enceinte (108) comporte un orifice inférieur (170) qui est situé de manière à se trouver en-dessous de la dite bague (119) lorsque la vanne (101) est fermée et qui est relié à une source de fluide,
**iii)** le dit arbre de commande (104) comporte une seconde butée d'arrêt (171) disposée de manière à se trouver au-dessus de la dite bague (119) et à l'intérieur de la dite enceinte quelle que soit la position de l'obturateur (103).

13. Dispositif selon la revendication 12 caractérisé en ce que la dite source de fluide est une source de gaz sous pression.

14. Dispositif selon la revendication 12 caractérisé en ce que l'extrémité (120) de l'arbre de commande (104) pénètre dans l'extrémité (121) de l'arbre moteur (105) qui est creuse.

15. Dispositif selon la revendication 14 caractérisé en ce que la dite pièce de contact est constituée par un premier ressort de poussée (151) prenant appui d'une part sur la bague (119) et d'autre part sur la butée (129) située sous la dite bague, et par un deuxième ressort de poussée (177) prenant appui d'une part sur la bague (119) et d'autre part sur la butée (171) située au-dessus de la dite bague.

16. Dispositif selon la revendication 15 caractérisé en ce que le dit ensemble de liaison est constitué par des clavettes (160,161) disposées dans des alvéoles (173,174) portées par l'extrémité creuse (121) de l'arbre moteur (105) et maintenues en appui contre une gorge (172) portée par l'extrémité (120) de l'arbre de commande (104) grâce à une couronne circulaire (175) reliée à la bague (119) par des tiges (176).

## Patentansprüche

1. Sicherheits-Betätigungsvorrichtung für einen Schieber (1, 101), der einen Körper (2, 102) aufwiest und ein Verschlußglied (3, 103) besitzt, das sich durch Translationsbewegung verschiebt und von einer Steuerwelle (4, 104) gesteuert wird, die selbst von einer Antriebswelle (5, 105) betätigt wird, die in der Verlängerung der Steuerwelle (4, 104) angeordnet und über ein Verbindungssystem (7, 107) fest mit dieser verbunden ist, dadurch gekennzeichnet, daß
1) das Verbindungssystem (7, 107) einen hohlen zylindrischen Behälter (8, 108) aufeist, in den beide Wellen eindringen, wobei der Behälter (8, 108) einen gasdichten Ring (19, 52, 119) aufweist, der in Translationsrichtung mit mindestens einer der beiden Wellen mittels eines Kontaktstücks (22, 51, 151, 177) fest verbunden ist, das unter der Wirkung eines auf den Ring (19, 52, 119) ausgeübten Drucks einziehbar ist,
2) der Ring (19, 52, 11) eine Verbindungseinheit (27, 28, 60, 61, 63, 160, 161) trägt, die gleichzeitig die Enden der Steuerwelle (4, 104) und der Antriebswelle (5, 105) einspannt, die sich im Inneren des Behälters (8, 108) befinden,
3) der Behälter (8, 108) eine obere Öffnung (30, 130) aufweist, die so angeordnet ist, daß sie sich oberhalb des Rings (19, 52, 119) befindet, wenn der Schieber offen ist,
4) die Steuerwelle (4, 104) mindestens einen Anschlag (29, 129) aufweist, der so angeordnet ist, daß er sich unter dem Ring (19, 52, 119) und innerhalb des Behälters (8, 108) befindet, unabhängig von der Stellung des Verschlußglieds (3, 103),
5) eine Fluidquelle mit der oberen Öffnung (30, 130) verbunden ist.

2. Vorrichtung nach Anspruch 1, dadurch gekennzeichnet, daß die Verbindungseinheit in den Ring (19, 52) eingebaut ist.

3. Vorrichtung nach Anspruch 2, dadurch gekennzeichnet, daß die Fluidquelle eine Quelle (31) von unter Druck stehendem Gas ist.

4. Vorrichtung nach Anspruch 3, dadurch gekennzeichnet, daß die Gasquelle (31) ein unter Druck stehendes Gas enthaltender Tank mit einem Hahn (32) ist.

5. Vorrichtung nach Anspruch 3, dadurch gekennzeichnet, daß die Gasquelle (31) ein pyrotechnischer Generator ist, der mit einem Zünder versehen ist.

6. Vorrichtung nach Anspruch 3, dadurch gekennzeichnet, daß das Ende (21) der Antriebswelle (5) in das hohle Ende (20) der Steuerwelle (4) eindringt.

7. Vorrichtung nach Anspruch 6, dadurch gekennzeichnet, daß das Kontaktstück ein abscherbarer Stift (22) ist, der den Ring (19), die Steuerwelle (4) und die Antriebswelle (5) fest verbindet.

8. Vorrichtung nach Anspruch 7, dadurch gekennzeichnet, daß das Ende (20) der Steuerwelle (4) mindestens einen Querkanal (25) besitzt, in dem zu beiden Selten der Antriebswelle (5) mindestens zwei Kugeln (27, 28) angeordnet sind, die radial vom Ring (19) blockiert werden und gegen den Boden einer kreisförmigen Kehle (26) anliegen, die auf dem Ende (21) der Antriebswelle (5) sitzt.

9. Vorrichtung nach Anspruch 3, dadurch gekennzeichnet, daß das Ende der Steuerwelle (4) in das hohle Ende der Antriebswelle (5) eindringt.

10. Vorrichtung nach Anspruch 3, dadurch gekennzeichnet, daß der Ring (52) eine obere zylindrische Vertiefung (53) aufweist und daß die Enden (58, 59) der Wellen (4, 5) verbreitert und in mindestens zwei Halteklammern (60, 61) eingespannt sind, die selbst in der Vertiefung (53) des Rings (52) angeordnet sind.

11. Vorrichtung nach Anspruch 10, dadurch gekennzeichnet, daß das Kontaktstück eine Schubfeder (51) ist, die einerseits auf dem Anschlag (29) und andererseits auf dem Ring (52) aufliegt.

12. Vorrichtung nach Anspruch 1, dadurch gekennzeichnet, daß
i) das Ende einer der beiden Wellen (104, 105) in das hohle Ende der anderen Welle eindringt,
ii) der Behälter (108) eine untere Öffnung (107) aufweist, die so angeordnet ist, daß sie sich unterhalb des Rings (119) befindet, wenn der Schieber (101) geschlossen ist, und die mit einer Fluidquelle verbunden ist,
iii) die Steuerwelle (104) einen zweiten Anschlag (171) aufweist, der so angeordnet ist, daß er sich oberhalb des Rings (119) und innerhalb des Behälters befindet, unabhängig von der Stellung des Verschlußglieds (103).

13. Vorrichtung nach Anspruch 12 dadurch gekennzeichnet, daß die Fluidquelle eine Quelle unter Druck stehenden Gases ist.

14. Vorrichtung nach Anspruch 12, dadurch gekennzeichnet, daß das Ende (120) der Steuerwelle (104) in das hohle Ende (121) der Antriebswelle (105) eindringt.

15. Vorrichtung nach Anspruch 14, dadurch gekennzeichnet, daß das Kontaktstück aus einer ersten Schubfeder (151), die einerseits auf dem Ring (119) und andererseits auf dem Anschlag (129) aufliegt, der sich unter dem Ring befindet, und aus einer zweiten Schubfeder (177) besteht, die einerseits auf dem Ring (119) und andererseits auf dem Anschlag (171) aufliegt, der sich oberhalb des Rings befindet.

16. Vorrichtung nach Anspruch 15, dadurch gekennzeichnet, daß die Verbindungseinheit aus Keilen (160, 161) besteht, die in Zellen (173, 174) angeordnet sind, welche auf dem hohlen Ende (121) der Antriebswelle (105) sitzen, und mittels eines kreisförmigen Kranzes (175), der mit dem Ring (119) über Stangen (176) verbunden ist, gegen eine Kehle (172) in Anschlag gehalten werden, die auf dem Ende (120) der Steuerwelle (104) sitzt.

## Claims

1. Safety device for actuation of a valve (1, 101) comprising a body (2, 102) and having an obturator (3, 103) which moves by translation and which is controlled by a control shaft (4, 104) which is itself driven by a driving shaft (5, 105) disposed in the prolongation of the said control shaft (4, 104) and integral with the latter through a connection system (7, 107) characterized in that:
1) the said connection system (7, 107) comprises a hollow cylindrical enclosure (8, 108) into which penetrate each of the two shafts, the said enclosure (8, 108) containing a gastight ring (19,52, 119) which in translation is made integral with at least one of the two shafts by means of a contact piece (22, 51, 151, 177) which is retractable under the action of a pressure exerted on the said ring (19,52, 119),
2) the said ring (19,52, 119) carries a connection assembly (27,28, 60,61,63, 160,161) which simultaneously grips the ends of the said control shaft (4, 104) and of the said driving shaft (5, 105) located inside the said enclosure (8, 108),
3) the said enclosure (8, 108) comprises an upper orifice (30, 130) located so that it is above the said ring (19,52, 119) when the valve is open,
4) the said control shaft (4, 104) comprises at least one limit stop (29, 129) disposed so that it is below the said ring (19,52, 119) and inside the said enclosure (8, 108) irrespective of the position of the obturator (3, 103),
5) a fluid source is connected to the said upper orifice (30, 130).

2. Device according to Claim 1, characterized in that the said connection assembly is incorporated into the said ring (19,52).

3. Device according to Claim 2, characterized in that the said fluid source is a pressurized gas source (31).

4. Device according to Claim 3, characterized in that the said gas source (31) is a pressurized gas tank equipped with a tap (32).

5. Device according to Claim 3, characterized in that the said gas source (31) is a pyrotechnic gas generator equipped with an initiator.

6. Device according to Claim 3, characterized in that the end (21) of the driving shaft (5) penetrates into the end (20) of the control shaft (4), the said latter end being hollow.

7. Device according to Claim 6, characterized in that the said contact piece is a shearable pin (22) which simultaneously renders integral the ring (19), the control shaft (4) and the driving shaft (5).

8. Device according to Claim 7, characterized in that the said end (20) of the control shaft (4) comprises at least one transverse channel (25) in which are disposed, on both sides of the driving shaft (5), at least two balls (27,28) which are radially clamped by the ring (19) and which bear against the the bottom of a circular groove (26) carried by the end (21) of the driving shaft (5).

9. Device according to Claim 3, characterized in that the end of the control shaft (4) penetrates into the end of the driving shaft (5), the said latter end being hollow.

10. Device according to Claim 3, characterized in that the ring (52) has an upper cylindrical cavity (53) and in that the ends (58,59) of the said shafts (4,5) are widened and gripped in at least two retaining catches (60,61) which are themselves disposed in the cavity (53) comprised by the ring (52).

11. Device according to Claim 10, characterized in that the said contact piece is a thrust spring (51) bearing both on the limit stop (29) and on the ring (52).

12. Device according to Claim 1, characterized in that:
i) the end of one of the two shafts (104, 105) penetrates into the end of the other, the said latter end being hollow,
ii) the said enclosure (108) comprises a lower orifice (170) which is located so that it is below the said ring (119) when the valve (101) is closed and which is connected to a fluid source,
iii) the said control shaft (104) comprises a second limit stop (171) disposed so that it is above the said ring (119) and inside the said enclosure irrespective of the position of the obturator (103).

13. Device according to Claim 12, characterized in that the said fluid source is a pressurized gas source.

14. Device according to Claim 12, characterized in that the end (120) of the control shaft (104) penetrates into the end (121) of the driving shaft (105), the said latter end being hollow.

15. Device according to Claim 14, characterized in that the said contact piece is constituted by a first thrust spring (151) bearing both on the ring (119) and on the stop (129) located under the said ring and by a second thrust spring (177) bearing both on the ring (119) and on the stop (171) located above the said ring.

16. Device according to Claim 15, characterized in that the said connection assembly is constituted by keys (160,161) disposed in receptacles (173,174) carried by the hollow end (121) of the driving shaft (105) and retained, by means of a circular collar (175) connected to the ring (119) by rods (176), so that they bear against a groove (172) carried by the end (120) of the control shaft (104).
